**Europäisches Patentamt**

**European Patent Office**

**Office européen des brevets**

(19)

(11) **EP 1 003 300 A2**

(12) **EUROPEAN PATENT APPLICATION**

(43) Date of publication:
**24.05.2000 Bulletin 2000/21**

(51) Int Cl.$^7$: **H04B 10/155**

(21) Application number: **99440307.9**

(22) Date of filing: **10.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.11.1998 IT MI982516**

(71) Applicant: **ALCATEL**
**75008 Paris (FR)**

(72) Inventor: **Conti, Mariangela**
**20050-Villa Raverio (Milano) (IT)**

(74) Representative:
**Schmidt, Werner Karl, Dipl.-Phys. et al**
**Alcatel**
**Intellectual Property Department, Stuttgart**
**Postfach 30 09 29**
**70449 Stuttgart (DE)**

(54) **Method for the automatic restart of optical transmitters in fiber optic links**

(57)     A new method is described for the automatic restart of optical transmitters in a fiber optic cable system. Said restart follows the automatic shut-down of the transmitters themselves as a consequence of a fault. The method in accordance with the present invention comprises the steps of periodically sending over the system, by means of a transmitter, a restart pulse and wait for such pulse, which is received/retransmitted by further receivers/transmitters to come back, within a given time interval, to the transmission point and is characterized in that it further comprises the step of increasing the restart pulse duration by a certain amount whenever it is received/retransmitted. Thus, the method in accordance with the present invention is independent of the delays introduced along the optical link because of the introduction of additional equipments (namely WDMs) and moreover it permits of more easily remaining within the imposed safety limits concerning the initial short duration of the pulse.

**Fig. 3**

EP 1 003 300 A2

**Description**

The present invention relates to optical systems and particularly concerns an effective method for the automatic restart of optical transmitters in fiber optic cable links, such a restart must occur, for instance, after a fault that has caused the automatic shut-down of the transmitters themselves.

As is known, should a fault of any kind occur in an optical link, for instance in the case where a fiber optic cable breaks, safety considerations for the operators call for the provision of an ALS (Automatic Laser Shut-down) procedure. Through this function all the lasers are automatically shut down at once in the case where a LOS (Loss of Signal) is detected.

Once the fault has been repaired, it is necessary to provide for the restart of the devices which had been switched off and this must obviously occur as soon as possible. In this connection, one may proceed manually (an operator takes charge of restarting the transmitters as soon as the restoration has finished) or automatically. It is clear that the manual restart, besides being time consuming and inconvenient, is extremely dangerous since the operator in charge of restart erroneously believing that the fault has been repaired, could restart the transmitters and thus seriously harm another operator which, on the contrary, has not finished the restoration yet.

As far as the automatic restart is concerned, on the contrary, it is necessary to point out first that it is not compulsory for all kinds of systems, namely for Class 1 systems, as contemplated by ITU-T Recommendation G.958 (section 9.7). In the presently provided automatic laser restart systems, a recommended restart pulse of a certain fixed duration ($2 \pm 0,25$s) is periodically sent by a transmitter, which sent pulse must be received by the corresponding receiver within a determined time interval. However, by using the pulse length specified in the Recommendation ITU-T G.958, the automatic laser restart does not occur when additional delays ($D > 0,45$s) are introduced along each of the optical links, with said delays being caused by introducing additional equipments, namely one or more Wavelength Division Multiplexers (WDMs) between a transmitter and a receiver.

In order to overcome this problem of delays caused by additional equipments, Recommendation ITU-T G. 681 contemplates a greater restart pulse length (namely, $9 \pm 0,5$s) or using the manual restart procedure (with the drawbacks mentioned above). In other words, a receiver waits for the return of the restart signal, which is delayed because of the presence of additional equipments along the link, for a pre-established time of $9 \pm 0,5$s. Such a period of time is computed with a certain line architecture but, however, it is often excessively long due to limitations on the transmitted power.

Moreover, the fact of predicting in advance the maximum delay for a certain line architecture introduces limitations in the possibility of modifying the line architecture by introducing a higher number of apparatus (WDM) between the terminals.

In view of the above indicated drawbacks, it is the object of the present invention to provide a new method for automatically restarting all the optical transmitters of an optical telecommunication system which were previously switched off because of the detection of a fault or a break in the connection, characterized by a starting pulse duration which is as short as possible and which is not tied to the architecture of the network.

This and further objects are achieved by a method according to the independent claim 1 which is considered an integral part of the present description. Further advantageous characteristics of the method are set forth in the dependent claims which are also intended to be an integral part of the present description.

A detailed description of the present invention is now given below merely by way of an exemplifying and non limiting example thereof which should be read with reference to the attached illustrative sheets of drawings in which the various figures show:

- Fig. 1 shows an optical system that will be referred to while describing the present invention;
- Fig. 2 schematically shows a time diagram relating to the restart procedure for the most critical case that could happen in the optical system of Fig. 1; and
- Fig. 3 shows a flow chart of the method in accordance with the present invention.

The present invention is based on the basic inventive concept that consists in transmitting a quite short starting restart pulse by the transmitter and increasing, by a given pre-established amount, the length of such a pulse at each transmitter of the involved line terminals. If the fault has actually been repaired, then, starting from a short pulse, one obtains in a few seconds a long pulse arriving at the transmitter that generated it, before the latter generates a new restart pulse. In this circumstance, the transmitter is kept switched on and it causes all the receivers/transmitters are kept switched on. Whereas, in the case where the fault is not yet repaired at the instant when the restart pulse is sent, the pulse would be increased at the first run only and therefore it certainly would not exceed the safety limits imposed by the Recommendations (which contemplate short pulses for high power lasers).

Therefore, when the optical link (for instance a broken optical cable) has been repaired, the starting restart pulse length $P_0$ will be increased at each receiver side by a certain $t_{LOS}$. Indeed, $t_{LOS}$ should be reduced by a certain amount "d" corresponding to the time difference between the entering of light into a receiver and the starting of light emission by a transmitter when the latter is in a shut-down state. According to ITU-T G.958, the value of "d" is conventionally equal to 0,85s. Therefore, the transmission will be restored automatically after n "rebounds" from one receiver to a transmitter as soon as the restart pulse duration ($P_O$) increased by "n" times the $\Delta_{INCRpulse}$ (amount of the increase of the restart pulse duration at the receiver side), is equal to twice the delay (D) introduced along the optical link, increased by "d" (as defined above), that is:

$$(P_0 + n*\Delta_{INCRpulse}) = (2*D+d)$$

where:

P$_0$ = length of the starting restart pulse at the first transmitter;
$t_{LOS}$ = time for declaring Loss of Signal state at the receiver side;
$\Delta_{INCRpulse} = t_{LOS}-d = t_{LOS}-0,85s$ = amount of the restart pulse duration increase at the receiver side;
n = number of times that the restart pulse has to "rebound" from receiver to transmitter; and
D = delay which is introduced along the optical link.

The maximum restart time ($T_{restart (max)}$), that anyway must be less than 60 seconds since the automatic restart occurs every 60-300 s in accordance with Recommendation ITU-T G.958, hence shall be equal to (replacing d by the 0,85 s value):

$$T_{restart(max)} = (2*D+0,85)*\{I_{NT}S_{UCC}[(2*D+0,85) - P_{0(min)} / (t_{LOS} - 0,85)] + 1 \}$$

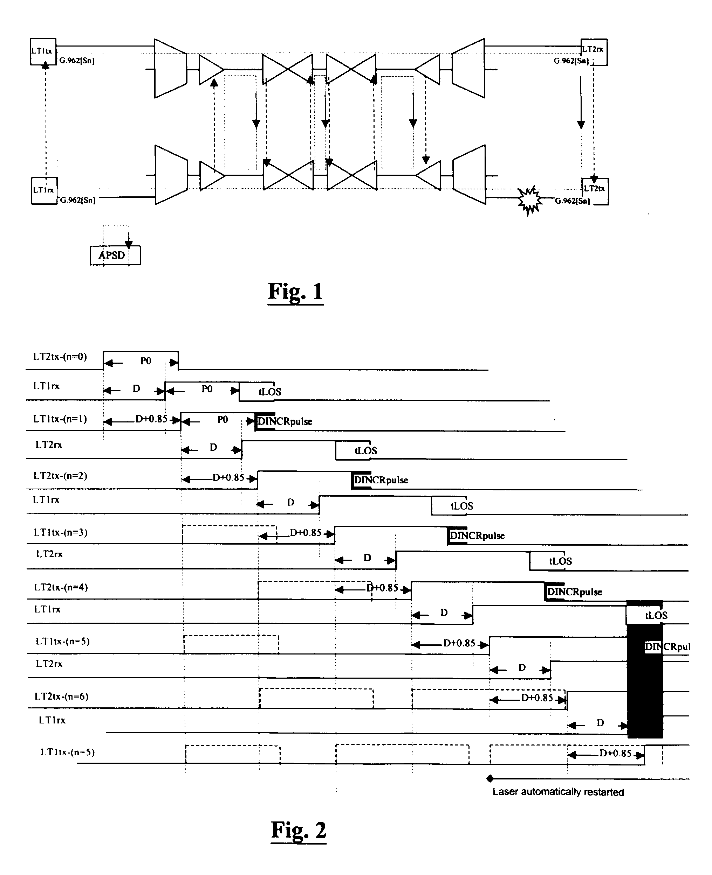

where:
$I_{INT}S_{UCC}$ = subsequent integer number (round up integer).
Among the obvious advantages of the present invention is the fact that it is independent of the delays which may be introduced along the optical system. This is because the restart pulse grows more depending on the delay. Moreover, it is easier to meet the emission duration constraints which are specified by IEC 825-1 for safety considerations. This is because at the startup, the restart pulse is short and grows only if the cable has been repaired.
The person skilled in the art will appreciate that in some circumstances the restart time could be excessively long. However, such drawback could be overcome by increasing the pulse duration proportionally to the received pulse length. In other words, here above a method has been described according to which the pulse length is increased by a fixed amount but, in order to reduce the restart time, a gradually rising increase could be provided, i.e. the longer the received pulse length, the higher it will be.
Consider now a real fault situation (break of a fiber-optic cable) in the most critical condition (break just after the second transmitter). Then, referring to Fig. 2, the time necessary for restoring the connection will be evaluated assuming to increase every time the pulse by a constant amount.

i) LT2tx sends a pulse of length or duration $P_O$;
ii) the pulse of length $P_0$ reaches LT1rx after a time D;
iii) after a time D+d (conventionally D+0.85s), the pulse of duration $P_0$, increased by $\Delta_{INCRpulse}$ at LT1tx, is re-transmitted by LT1tx itself: from the instant at which the pulse of length $P_0+\Delta_{INCRpulse}$ has been transmitted to the instant when the latter is received by LT2rx, time D still elapses;
iv) the pulse $P_0+\Delta_{INCRpulse}$ will be re-transmitted by LT2tx after an additional period equal to 0,85s (hence after 2* (D+0,85s), in all, since when it had been sent by LT2tx itself) increased by $\Delta_{INCRpulse}$;
v) the restart pulse, now of length $P_0+2*\Delta_{INCRpulse}$, is received by LT1rx after a time equal to D, calculated from the instant at which it is transmitted by LT2tx (from the start of the procedure, a time equal to 2*(D+0,85s)+D has elapsed, in all);
vi) LT1tx re-transmits it after 0,85s, again increased by $\Delta_{INCRpulse}$.

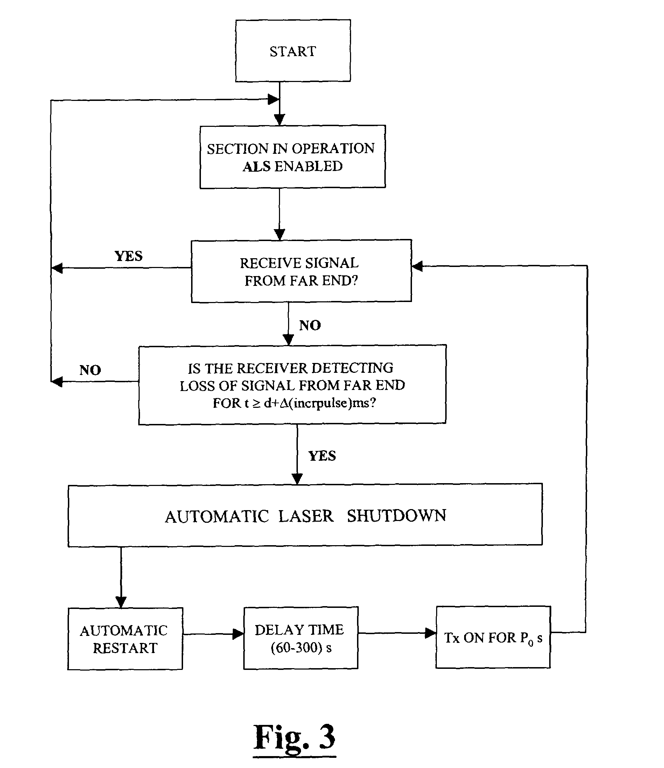

A flow chart of the method in accordance with the present invention is shown in Fig. 3.
In practice, the automatic restart procedure stops when the restart pulse reaches the transmitter while the latter is still transmitting the same restart pulse (in an automatic procedure the restart pulse is periodically transmitted by a transmitter until the latter receive a signal "ordering" it to stay switched on, because it is confirmed that the fault has been repaired). At any rate, the maximum restart time must be less than 60s as the automatic restart occurs every 60-300s in accordance with Recommendation G.958.

At this point, the main advantages of the invention, already mentioned above, are evident, i.e. firstly the fact that the solution is independent of the delays which may be introduced along the optical link and further the fact that it is easier to comply with the safety conditions imposed by IEC Recommendation 825-1 (at the beginning of the restart procedure, the restart pulse is extremely short and does not harm operators possibly involved in repairing the fault, indeed it grows only if the fault is actually repaired). The restart time, as said above, can be significantly reduced by increasing the pulse by a $\Delta_{INCRpulse}$.depending on the duration of the received pulse (proportional to n).

The present invention further comprises computer program code means adapted to perform all the steps of claim 1 when said program is run on a computer. Finally, it further includes a computer readable medium having a program recorded thereon, with said computer readable medium comprising computer program code means adapted to perform all the steps of claim 1 when said program is run on a computer.

Variations and modifications of the present invention should be apparent to those skilled in the art without departing from the scope of the present invention as defined by the attached claims.

## Claims

1. Method for the automatic restart of optical transmitters in a fiber optic cable system including optical transmitters designed to transmit pulses and optical receivers designed to receive pulses, said method comprising the steps of periodically sending over the system, through a transmitter, a restart pulse ($P_0$) and wait for such pulse, which is received/transmitted by further receivers/transmitters, to come back, within a given time interval, to the transmission point, characterized in that it further comprises the step of increasing the restart pulse duration by a certain amount ($\Delta_{INCRpulse}$) whenever it is received/re-transmitted.

2. Method according to claim 1, characterized in that the amount ($\Delta_{INCRpulse}$), by which the restart pulse duration ($P_0$) is increased, has a constant value.

3. Method according to claim 1, characterized in that the amount ($\Delta_{INCRpulse}$), by which the restart pulse duration ($P_0$) is increased, has a variable value increasing according to the received pulse duration.

4. Method according to claims 1, 2 or 3, characterized in that the maximum restart time ($T_{restart(MAX)}$) is obtained by equalizing the restart pulse duration ($P_0$) increased by n times the pulse increase ($\Delta_{INCRpulse}$) to twice the delay (D) introduced along the optical system, increased by the time difference (d) between the instant when the light enters the receiver and the instant when the transmitter emits the light, in the event that the transmitter is in the shut-down condition, i.e.:

$$(P_0 + n*(\Delta_{INCRpulse})) = (2*D+d)$$

from which

$$T_{Restart(MAX)} = (2*D+d)*\{I_{NT}S_{UCC}[(2*D+d) - P_{0(min)} / (\Delta_{INCRpulse})] + 1\}$$

where:

$\Delta_{INCRpulse} = T_{LOS}-d$ = amount of the restart pulse duration at the receiver side;
$T_{Restart(MAX)}$ = maximum restart time (in the most unfavorable condition)
D = delay introduced along the optical link;
d = time difference between the instant when the light enters the receiver and the instant when the transmitter emits the light, in the event that the transmitter is in the shut-down state; and
$I_{NT}S_{UCC}$ = subsequent integer number (round up integer).

5. Method according to claim 4, characterized in that said time difference (d) between the instant when the light enters the receiver and the instant when the transmitter emits the light, in the event that the transmitter is in the shut-down condition, is equal to 0,85s.

6. Computer program code means adapted to perform all the steps of claim 1 when said program is run on a computer.

7. A computer readable medium having a program recorded thereon, said computer readable medium comprising computer program code means adapted to perform all the steps of claim 1 when said program is run on a computer.

**Fig. 1**

**Fig. 2**

```
                         ┌─────────────┐
                         │    START    │
                         └──────┬──────┘
                                │
        ┌───────────────────────┼
        │                       ▼
        │              ┌──────────────────────┐
        │              │ SECTION IN OPERATION │
        │              │     ALS ENABLED      │
        │              └──────────┬───────────┘
        │                         │
        │                         ▼
        │   YES       ┌──────────────────────┐
        ◄─────────────│   RECEIVE SIGNAL     │◄──────────────┐
        │             │    FROM FAR END?     │               │
        │             └──────────┬───────────┘               │
        │                        │ NO                        │
        │                        ▼                           │
        │   NO       ┌──────────────────────────┐            │
        ◄────────────│ IS THE RECEIVER DETECTING │           │
                     │ LOSS OF SIGNAL FROM FAR END│          │
                     │  FOR t ≥ d+Δ(incrpulse)ms? │          │
                     └──────────┬────────────────┘           │
                                │ YES                        │
                                ▼                            │
              ┌──────────────────────────────────┐          │
              │   AUTOMATIC  LASER   SHUTDOWN     │          │
              └──────────┬───────────────────────┘          │
                         │                                   │
                         ▼                                   │
            ┌───────────┐    ┌────────────┐    ┌───────────┐ │
            │ AUTOMATIC │───►│ DELAY TIME │───►│ Tx ON FOR │─┘
            │  RESTART  │    │ (60-300) s │    │   P₀ s    │
            └───────────┘    └────────────┘    └───────────┘
```

IS THE RECEIVER DETECTING
LOSS OF SIGNAL FROM FAR END
FOR $t \geq d + \Delta(\text{incrpulse})$ ms?

Tx ON FOR $P_0$ s

## Fig. 3